Europäisches Patentamt

European Patent Office

Office européen des brevets

(11) Numéro de publication: **0 306 362 B1**

## FASCICULE DE BREVET EUROPEEN

(45) Date de publication de fascicule du brevet: **09.09.92**

(51) Int. Cl.⁵: **G01M 17/00**

(21) Numéro de dépôt: **88401958.9**

(22) Date de dépôt: **28.07.88**

(54) **Equipement d'acquisition et de traitement de données pour le contrôle de véhicules automobiles.**

(30) Priorité: **07.08.87 FR 8711265**

(43) Date de publication de la demande:
**08.03.89 Bulletin 89/10**

(45) Mention de la délivrance du brevet:
**09.09.92 Bulletin 92/37**

(84) Etats contractants désignés:
**DE ES GB IT**

(56) Documents cités:
**DE-A- 3 313 481**
**DE-A- 3 515 698**
**US-A- 4 121 452**

**ATZ AUTOMOBILTECHNISCHE ZEITSCHRIFT, vol. 79, no. 9, 1977, pages 401,402,405,406, Stuttgart, DE; H.-G. HIRSCHBERGER: "Das automatisierte Prüfstrassensystem des TÜV Rheinland"**

**PATENT ABSTRACTS OF JAPAN, vol. 7, no. 23 (P-171) [1168], 29 janvier 1983; & JP-A-57 175 241 (KIYATAPIRAA MITSUBISHI K.K.) 28.10.1982**

**PATENT ABSTRACTS OF JAPAN, vol. 6, no. 84 (P-117) [962], 22 mai 1982; & JP-A-57 22**

**531 (MITSUBISHI JUKOGYO K.K.) 05.02.1982**

**REGELUNGSTECHNISCHE PRAXIS, vol. 16, no. 12, 1974, pages 315-322, Munich, DE; K. LÖNS et al.: "Das hierarchische, dezentral strukturierte Prozessleitsystem im Versuchszentrum des Volkswagenwerks"**

(73) Titulaire: **ETABLISSEMENTS M. MULLER & CIE.**
**2, Avenue de la Trentaine Zone Industrielle**
**F-77500 Chelles(FR)**

(72) Inventeur: **Coetsier, Paul**
**22, Avenue Alphonse Lint**
**F-77400 Lagny(FR)**
Inventeur: **Douine, Denis**
**46, Rue des Bons Enfants**
**Collegien F-77400 Lagny(FR)**

(74) Mandataire: **Boutin, Antoine**
**Cabinet Tony-Durand, 77, Rue Boissière**
**F-75116 Paris(FR)**

## Description

La présente invention a pour objet un équipement d'acquisition et de traitement de données pour le contrôle de véhicules automobiles, par exemple dans un centre de contrôle , un atelier de réparation, ou à la sortie des chaînes de fabrication.

En ce qui concerne les centres de contrôle technique, ceux-ci comprennent, de manière générale, un certain nombre de bancs, qu'un contrôleur et son véhicule occupent successivement, pour faire subir à ce dernier divers tests, mesures, vérifications, contrôles, etc. On peut ainsi trouver des bancs de contrôle de ripage, de suspension, de freinage avant et arrière, de braquage, etc.

Dans les installations les plus simples, un contrôleur se déplace avec son véhicule d'un banc à l'autre, selon le type de contrôle à effectuer, et recueille, après chaque banc, les informations concernant le contrôle effectué. Dans les stations de contrôle de ce type tous les appareils de contrôle sont indépendants.

Il existe cependant des installations informatisées, où plusieurs bancs de contrôle sont connectés à un système informatique qui centralise les données. Le système délivre, en fin de parcours, les résultats définitifs du contrôle.

Si ces installations constituent une amélioration du contrôle automobile, elles présentent néanmoins un inconvénient lié au fait qu'un seul contrôleur à la fois peut occuper la piste de contrôle. En effet, si deux contrôleurs testaient deux véhicules simultanément sur la même piste (sur des bancs différents), le système informatique ne saurait distinguer les informations reçues et serait dans l'incapacité d'attribuer ces informations à l'un ou à l'autre des véhicules.

Une autre installation est connue de la publication ATZ AUTOMOBILTECHNISCHE ZEITSCHRIFT, Vol 79 N° 9 (1977). Cet article décrit une installation de contrôle automatisée à la chaîne de véhicules automobiles, comportant une piste dont le coeur est un calculateur connecté au différents postes de contrôle et qui délivre, à la fin des tests, un compte rendu imprimé. Ce système permet le contrôle simultané d'un certain nombre de véhicules qui suivent les uns après les autres à des intervalles d'environ 2 minutes. Le client déplace lui-même le véhicule d'un poste au poste suivant, les contrôleurs assistant uniquement au début et à la fin de la piste. La seule possibilité d'associer à un certain véhicule les données relevées est l'emplacement de celui-ci dans la succession de véhicules. L'inconvénient de ce système à la chaîne est que chaque véhicule est obligé de suivre toute la piste, et si un véhicule s'arrête pour une raison ou une autre, tous les véhicules se trouvant derrière ne peuvent plus avancer. Ce système est ainsi extrêmement automatisé, mais manque de flexibilité comme il ne permet pas au contrôleur de choisir uniquement certains des tests ou un seul.

On connaît également des installations dans lesquelles les contrôleurs disposent d'un boîtier de saisie et de mémorisation. Ils enfichent celui-ci dans un connecteur prévu à chaque banc, pour recueillir et stocker les informations relatives au contrôle qu'ils viennent d'effectuer sur ce banc. A la fin des opérations, le contrôleur connecte son boîtier sur un système informatique, et vide la totalité du contenu du boîtier dans le système. Ce dernier peut alors entreprendre le traitement et délivrer les résultats des contrôles effectués.

Mais ce systèmes présente encore des inconvénients liés au fait que le système informatique n'est pas relié directement aux divers bancs de contrôle. Il faut donc que l'information relative aux divers contrôles soit emmagasinée, ce qui suppose des boîtiers coûteux, puis transportée, ce qui est à l'origine d'erreurs. Par ailleurs, les bancs n'étant reliés ni au système informatique, ni entre eux, il n'est pas possible de choisir par avance certains types de contrôles pour certains véhicules sur certains bancs et d'autres types de contrôles pour d'autres véhicules sur les mêmes bancs. Il n'est pas non plus possible de guider le contrôleur d'un banc à un autre, en fonction des contrôles à effectuer et de la disponibilité des différents bancs de l'installation.

On connaît du Patent abstracts of Japan, vol. 7, no. 23 (P-171) [1168], du 29 janvier 1983, des moyens pour transmettre les informations délivrées par divers senseurs placés sur un véhicule, à une station mobile chargée de faire un diagnostic. La télécommande de cette télémétrie a uniquement pour but de transmettre une identité et de choisir une opération. Elle ne porte jamais sur la transmission des informations résultant des tests effectués.

Ce système ne permet pas la transmission de certains résultats de mesure d'un banc vers un autre. Par exemple, on ne peut transmettre le poids du véhicule mesuré sur le banc de suspension vers le banc de freinage, de sorte qu'on ne peut calculer l'efficacité de freinage qui est égale au rapport entre la force de freinage maximum développée sur les quatre roues du véhicule et le poids de ce véhicule.

La présente invention a pour but de proposer un équipement qui remédie à ces inconvénients et perfectionne le contrôle technique automobile. L'invention permet en effet de travailler avec des installations de grande capacité, comprenant plusieurs pistes de contrôle constituées chacune par plusieurs bancs de contrôle, plusieurs contrôleurs pouvant opérer simultanément sur plusieurs bancs d'une même piste ou sur des pistes différentes.

L'invention parvient à ce résultat grâce à l'utilisation de moyens qui permettent d'identifier le véhicule à l'origine des informations fournies par chaque banc de contrôle. En d'autres termes, lorsqu'un véhicule se trouve sur un banc de contrôle, les informations fournies par ce banc sont adressées à une unité centrale informatique et sont accompagnées d'une information d'identité permettant d'associer lesdites informations audit véhicule. Ainsi, l'unité centrale peutelle gérer toutes les information qui lui sont adressées, quel que soit le nombre de véhicules en cours de contrôle.

Un système d'identification de véhicules est connu du document DE A 3 313 481 qui décrit un dispositif permettant de suivre, pendant et après la production, des véhicules automobiles. Ce dispositif comprend un ensemble situé à demeure à bord du véhicule, ou sont stockées diverses données relatives audit véhicule, et un ensemble, extérieur au véhicule, qui permet de lire les informations relatives au véhicule équipé du premier ensemble. La communication s'effectue par radio (hautes fréquences) et utilise un code pour chaque véhicule. Or, ce dispositif n'est qu'un exemple d'un système d'identification de véhicules qui n'a aucun rapport avec un système de test sur des bancs de contrôle et il n'est pas informatisé au sens de l'équipement selon l'invention.

Contrairement à ce système d'identification, les moyens d'identification selon l'invention sont essentiellement constitués par un boîtier de télécommande, affecté à chaque véhicule, ce boîtier permettant de commander, à distance, les opérations de contrôle et, en même temps, de fournir au système une identité.

De façon plus précise, l'invention a pour objet un équipement d'acquisition et de traitement de données pour le centre de contrôle technique de véhicules automobiles, cet équipement étant destiné à permettre le contrôle simultané de plusieurs véhicules situés à des postes de contrôle différents ; cet équipement est caractérisé par le fait qu'il comprend :

- des boîtiers de télécommande muni chacun d'un clavier à touches et d'un moyen réglable permettant de définir une identité pour chaque boîtier, chaque boîtier étant capable d'émettre un signal comprenant une première partie qui traduit l'identité du boîtier et une seconde partie qui comprend une information pouvant être un code correspondant à une touche du clavier,
- une console de visualisation permettant à un opérateur d'affecter à chaque véhicule se présentant au centre de contrôle un boîtier de télécommande et de mettre en correspondance l'identité du véhicule et l'identité du boîtier qui lui est affecté,

- des moyens d'affichage disposés à proximité des postes de contrôle, ces moyens étant aptes à afficher des informations liées au contrôle, ainsi qu'un menu d'opérations proposées au contrôleur, chaque opération étant présentée, sur l'écran avec un code de sélection qui correspond aux codes des différentes touches du clavier des boîtiers de commande,
- des récepteurs de télécommande disposés à proximité des moyens d'affichage, ces récepteurs étant aptes à recevoir le signal émis par les boîtiers de commande,
- une unité centrale informatisée reliée à la console de visualisation, aux différents postes de contrôle, aux moyens d'affichage et aux récepteurs de télécommande.

De préférence cette unité comprend au moins une carte d'acquisition comprenant un microprocesseur relié à plusieurs sous-ensembles constitués chacun par un circuit de saisie relié à l'un des postes de contrôle, un circuit de commande d'affichage relié au moyen d'affichage associé à ce poste, cette carte recevant les signaux délivrés par les différents postes de contrôle auxquels elle est reliée, chaque signal étant associé au signal d'identification correspondant au boîtier de télécommande qui a ordonné l'opération de contrôle, chaque signal étant ainsi associé à un véhicule particulier.

De préférence, le boîtier de télécommande fonctionne à l'aide d'un rayonnement infrarouge. Mais naturellement d'autres dispositifs de télécommande pourraient être utilisés (par ultrasons, radio, etc.).

De préférence encore, les moyens d'affichage sont des tubes à rayons cathodiques commandés par des signaux vidéo. Mais on pourrait utiliser d'autres moyens comme des écrans plats à cristaux liquides.

L'invention sera mieux comprise à la lumière de la description qui va suivre. Cette description se réfère à des dessins annexés sur lesquels :

- La figure 1 montre le plan général d'une installation de contrôle de véhicules automobiles pouvant être pilotée par l'équipement de l'invention,
- La figure 2 représente un schéma général d'un équipement selon l'invention,
- La figure 3 montre l'architecture de l'unité centrale,
- La figure 4 montre l'architecture d'une carte contrôleur de poste,
- La figure 5 montre l'organisation des signaux numériques émis par le boîtier de télécommande,
- La figure 6 illustre un système de modulation de position,

- La figure 7 montre l'organisation d'une trame numérique,
- La figure 8 illustre le cycle de répétition d'une trame,
- La figure 9 illustre une variante de réalisation dans laquelle le cycle de répétition d'une trame dépend du boîtier de télécommande qui l'émet,
- La figure 10 montre une variante du boîtier avec possibilité de connexion à un appareil supplémentaire,
- La figure 11 montre le schéma électrique d'un boîtier de télécommande.

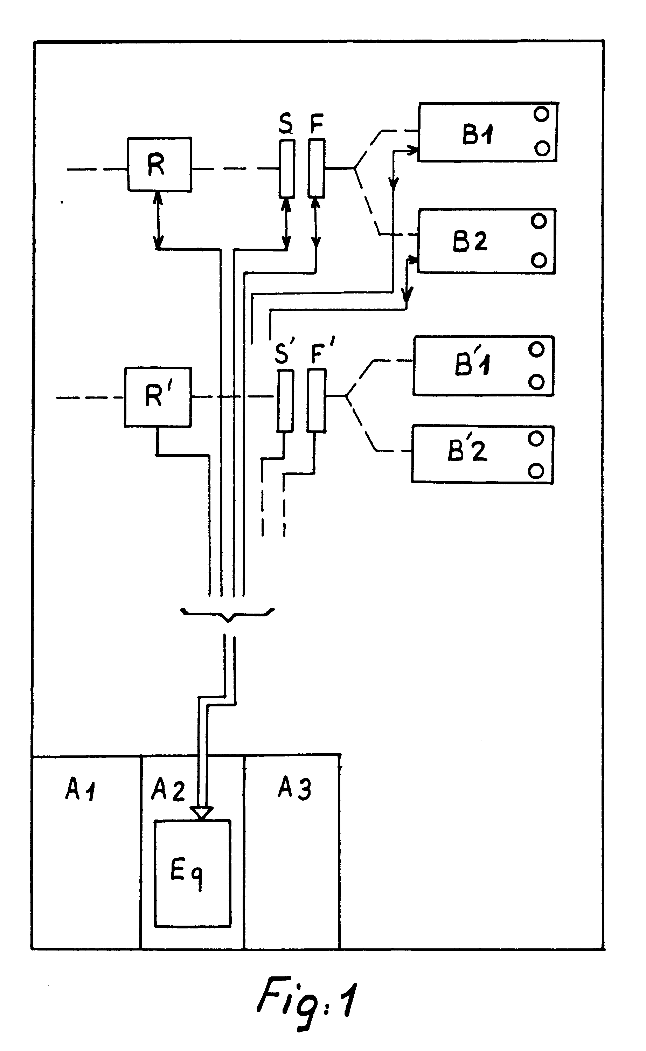

La figure 1 représente un centre de contrôle technique automobile, qui peut être piloté par l'équipement selon l'invention. Tel que représenté, ce centre comprend plusieurs pistes de contrôle constituées de plusieurs bancs, comme par exemple un banc R de contrôle du ripage, un banc S de contrôle de la suspension, un banc F de contrôle du freinage (avant ou arrière), et des bancs B1 et B2 de contrôle du braquage.

Les pistes peuvent être identiques ou différentes.

Le centre comprend encore un certain nombre d'ateliers A1, A2, A3 destinés par exemple à l'accueil des clients, au secrétariat, aux contrôleurs chargés de la vérification des véhicules.

Une partie Eq de l'équipement électronique qui permet de commander et de gérer ce centre de contrôle, peut être disposé (par exemple) dans l'atelier A2. Il est relié à tous les bancs de contrôle du centre.

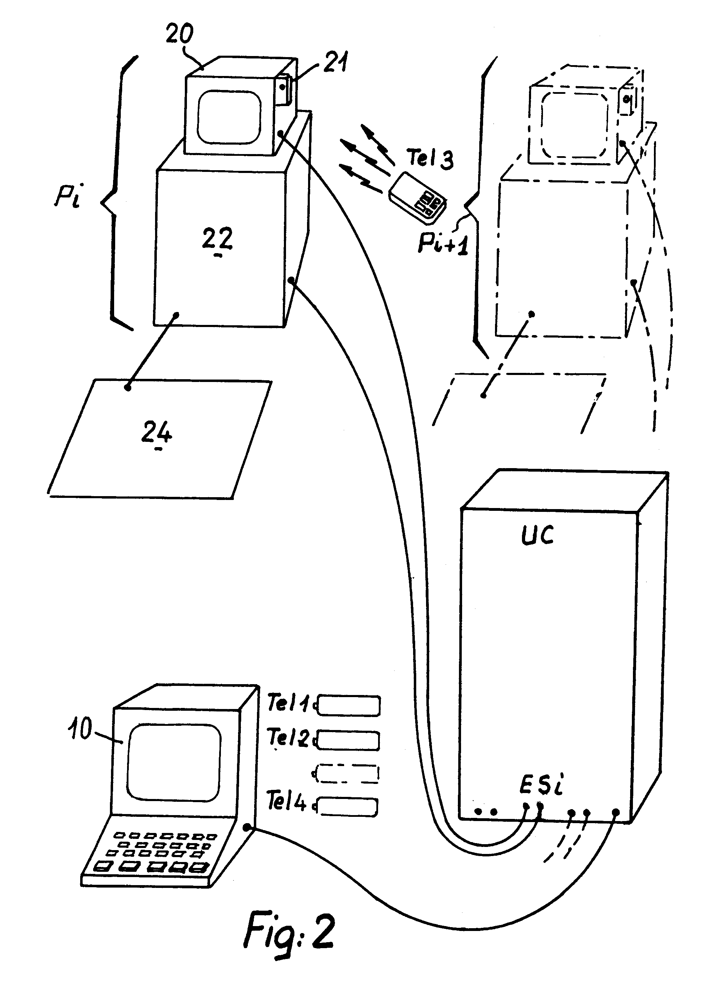

La présente invention ne porte pas sur les bancs de contrôle, qui peuvent être de tout type connu mais sur un équipement comprenant plusieurs sous-ensembles représentés de manière schématique sur la figure 2. Sur cette figure, on voit un ensemble de boîtiers de télécommande Tel1, Tel2, etc. Ces boîtiers, comme on le comprendra mieux par la suite, sont munis chacun d'un clavier à touches et d'un moyen réglable permettant de définir une identité. Chaque boîtier est capable d'émettre un signal comprenant une première partie qui traduit l'identité du boîtier et une seconde partie qui comprend une information pouvant être un code correspondant à une touche du clavier sélectionnée par le contrôleur muni de ce boîtier (mais cette information peut correspondre aussi à une mesure comme on le comprendra mieux par la suite).

L'équipement comprend encore une console de commande 10, qui permet à un opérateur d'affecter à chaque véhicule se présentant au centre de contrôle un boîtier de télécommande et de mettre en correspondance l'identité du véhicule et l'identité du boîtier qui lui est affecté. Sur la figure 2, on voit, par exemple, que le boîtier de télécommande Tel3 a été affecté à un véhicule (non représenté) en cours de contrôle dans le centre, mais que les boîtiers Tel1, Tel2 et Tel3 sont disponibles. On peut utiliser une douzaine de boîtiers ou plus.

L'équipement représenté comprend encore des moyens d'affichage 20, constitués par exemple par un tube à rayon cathodique tels qu'on les trouve dans les récepteurs de télévision. Ces moyens d'affichage sont aptes à afficher diverses informations liées au contrôle effectué sur le banc 24 et un menu d'opérations proposées au contrôleur disposé sur ce banc. Chaque opération est présentée, sur l'écran d'affichage, avec un code de sélection qui correspond au code des différentes touches du clavier des boîtiers de commande.

Les moyens d'affichage sont disposés sur un pied 22 comprenant des moyens électroniques ou électromécaniques permettant de commander les moteurs de un ou plusieurs banc(s) de contrôle 24.

Le moyen d'affichage comprend également un récepteur 21 capable de coopérer avec les boîtiers de télécommande.

L'ensemble des moyens 20, 21, 22, constitue ce que l'on conviendra de désigner par la suite par "poste de contrôle".

Le centre de contrôle comprend plusieurs postes de ce type, comme représenté sur la figure 2 (Pi, Pi + 1...).

Un poste de contrôle peut être affecté à un ou plusieurs bancs.

L'équipement comprend encore une unité centrale informatisée UC, qui est reliée, d'une part, à la console de commande 10 et, d'autre part, aux différents postes de contrôle.

Le fonctionnement général de cet équipement est le suivant :

Lorsqu'un véhicule se présente pour subir un contrôle, on lui attribue un boîtier de télécommande choisi parmi les boîtiers disponibles. A l'aide de la console 10 on indique à l'unité centrale UC que le boîtier de télécommande choisi va correspondre au véhicule en question, lequel peut être identifié par sa marque, son type, son numéro minéralogique, la carte grise de son propriétaire, etc.

Muni de ce boîtier, le contrôleur va effectuer la série de contrôles requis, en se déplaçant de poste à poste. Arrivé devant chaque poste, le contrôleur se voit proposer sur l'écran d'affichage une série d'opérations repérées par un code. Le contrôleur appuie sur celle des touches du boîtier qui correspond à l'opération qu'il souhaite voir effectuer, ce qui a pour effet non seulement de déclencher cette opération, mais encore d'indiquer à l'unité centrale que cette opération concerne tel véhicule.

L'unité centrale peut donc acquérir et traiter les informations délivrées par le poste de contrôle, sans perdre l'information d'identité du véhicule concerné.

Le contrôleur se déplace ainsi de poste en poste, soit selon un chainage préalablement établi au moment de la prise en charge du véhicule, soit à son gré en fonction de la charge du centre de contrôle.

Lorsque le contrôle est terminé, l'unité centrale est capable de délivrer, notamment de manière imprimée, les résultats globaux des contrôles effectués. Le boîtier de commande est alors libéré et remis à la disposition des nouveaux utilisateurs.

On comprend, dans ces conditions, que l'équipement de l'invention soit capable de gérer un centre de contrôle multipistes, multicontrôleurs et multivéhicules. Par ailleurs il n'existe aucune contrainte d'implantation pour les différentes pistes. Un équipement conforme à l'invention peut prendre en charge par exemple une douzaine de couples contrôleurs-véhicules au même moment et situés à autant de postes de travail différents. Il n'existe pas non plus d'obligation à respecter un ordre dans les contrôles individuels.

L'unité centrale est capable de centraliser les résultats des mesures effectuées à chaque poste (suspension, freinage, ripage, géométrie, etc.), de les comparer à des données fournies par le constructeur. Elle peut encore, soit imprimer les résultats sur un rapport, soit les transmettre à un ordinateur de gestion du centre de contrôle pour une édition et/ou une mémorisation.

Par ailleurs, l'équipement de l'invention rend le contrôle très simple et très flexible, grâce au dialogue permanent qui s'instaure entre les écrans d'affichage et le contrôleur. En outre, ce dernier n'a pas à quitter son véhicule pendant les mesures à chaque poste.

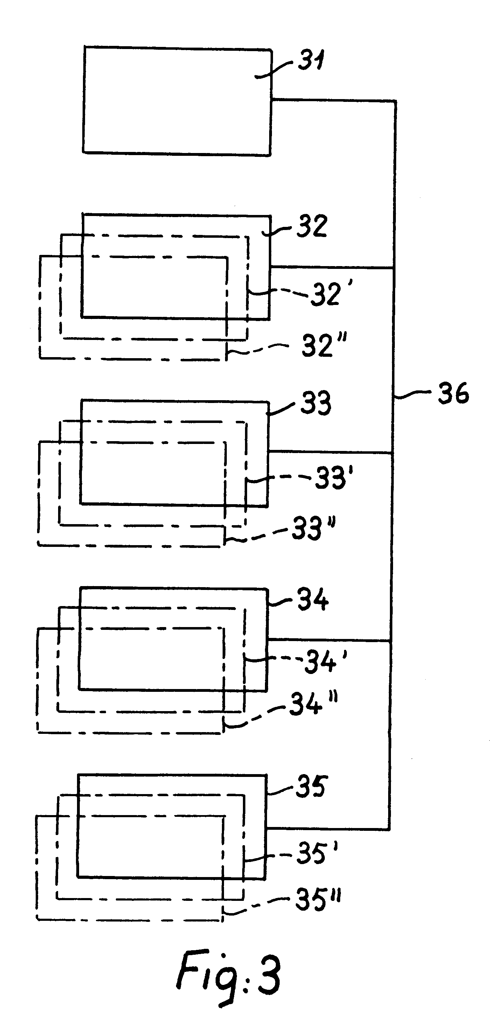

L'unité centrale UC possède une architecture qui est illustrée schématiquement sur la figure 3.

L'unité centrale comprend une carte 31, dite CPU (pour "Central Processing Unit") des cartes 32, 32$'$, 32$''$... d'extension mémoire, des cartes 33, 33$'$, 33$''$... d'entrée-sortie, des cartes 34, 34$'$, 34$''$... contrôleur de poste, des cartes 35, 35$'$, 35$''$... de contrôleur de banc. Toutes ces cartes sont reliées à la carte CPU par un bus bidirectionnel 36.

La carte CPU (référencée 31) arbitre le fonctionnement des autres cartes et exécute le programme contenu dans les cartes extension mémoire 32, 32$'$, 32$''$etc... Egalement la carte CPU stocke les résultats de mesure des différents véhicules en contrôle.

Les cartes entrées/sorties 33, 33$'$, 33$''$ etc... permettent de communiquer avec différents types de périphériques : imprimantes, claviers, micro-ordinateurs, modem, etc...

Les cartes contrôleur de postes 34, 34$'$, 34$''$ etc... émettent des signaux vidéo en direction des différents écrans 20, et reçoivent et décodent les signaux reçus sur les récepteurs infrarouge 21.

Les cartes contrôleur de banc 35, 35$'$, 35$''$ etc... reçoivent les signaux des capteurs en provenance des bancs, convertissent les signaux analogiques en signaux numériques et envoient vers les pieds 22 les commandes de marche, d'arrêt, et de sens du moteur.

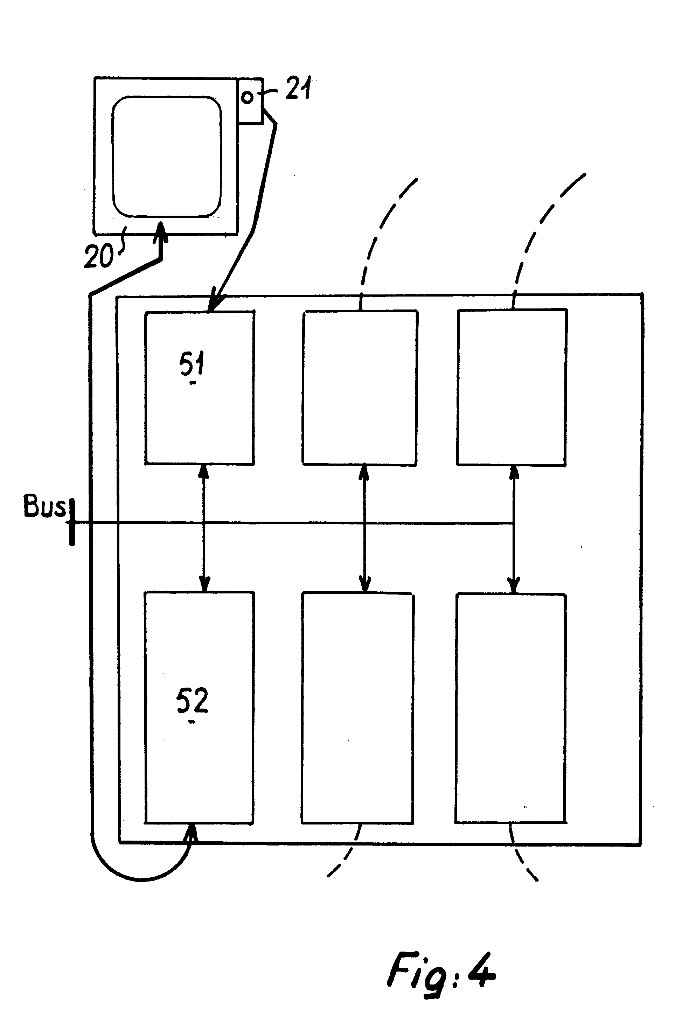

Une carte contrôle de postes est représentée de façon schématique sur la figure 4. Cette carte comprend des sous-ensembles comprenant chacun un circuit 51 relié à un récepteur 21 et un circuit 52 relié aux moyens d'affichage 20. La carte représentée sur la figure 4 comprend trois sous-ensembles de ce type permettant de correspondre avec trois postes de contrôle différents.

Le rôle du circuit 51 est de traiter les informations de télécommande détectées par le récepteur 21, informations qui contiennent, d'une part, l'identité du véhicule en cours de contrôle et, d'autre part, l'ordre émis par le contrôleur à l'aide de son boîtier. Le rôle du circuit 52 est de commander l'affichage des informations qui apparaissent sur l'écran du moyen d'affichage 20.

Le circuit 51 à microprocesseur décode les signaux infrarouge, vérifie si l'identité du véhicule est celle qui est attendue, rejette les informations inattendues, mémorise le mode de fonctionnement (télécommande ou télémesure) et l'information de télécommande ou de télémesure, envoie cet enregistrement à la carte CPU.

La carte CPU envoie au circuit 51, la ou les identités des véhicules attendus.

Le circuit 52 contient la mémoire d'écran qui est chargée par la carte CPU et engendre, à partir de cette mémoire, les signaux vidéo et de synchronisation vers l'écran.

On va décrire maintenant en détail une variante de réalisation du système de télécommande, qui permet de transmettre à l'unité centrale, d'une part, l'information d'identité du véhicule et, d'autre part, l'information concernant l'opération de contrôle à effectuer.

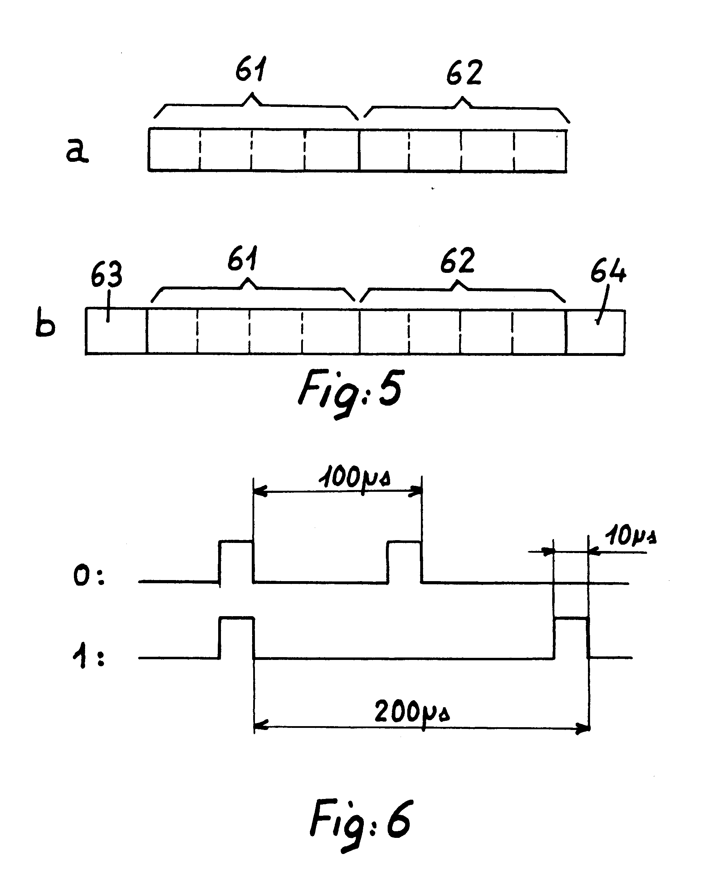

Les informations transmises par les boîtiers de télécommande sont des informations numériques qui peuvent être organisées comme illustré sur la figure 5.

Sur la partie (a) de cette figure, on voit que les données numériques transmises sont organisées en deux groupes : un premier groupe 61 qui comprend quatre bits et qui correspond à l'identité du véhicule et un second groupe 62, également composé de quatre bits, et qui contient l'information à transmettre. Dans ce mode de réalisation on pourra donc disposer de seize boîtiers ayant des identités différentes allant de 0 à 15. On pourra également transmettre des informations choisies dans un groupe qui comprend seize valeurs possibles. Naturellement, si l'on veut utiliser plus de seize boîtiers on pourra augmenter le nombre de bits disponibles.

Sur la partie (b) de la figure 5, on voit un paquet de données un peu plus complexe que le précédent, en ce sens qu'il comprend en outre un premier bit 63, dont on comprendra mieux la signification plus tard et qui permet d'indiquer au poste de contrôle que l'on fonctionne soit en mode normal de télécommande, soit en mode de télémesure.

Le paquet de données représenté sur la partie (b) comprend également un dernier bit 64, qui permet de suivre l'évolution de l'état de la pile présente dans le boîtier de télécommande.

Pour transmettre toutes ces données numériques, on utilise de préférence un système d'impulsions à modulation de position (en abrégé PPM) qui est illustré sur la figure 6. Pour transmettre un bit de valeur 0, on émet deux impulsions séparées d'une durée de l'ordre de 100 $\mu$s. Pour transmettre un bit de valeur 1, on transmet encore deux impulsions mais avec un intervalle double, donc dans l'exemple pris égal à 200 $\mu$s. Il va de soi que ces valeurs peuvent être modifiées.

La durée des impulsions peut être par exemple de l'ordre de 10 $\mu$s.

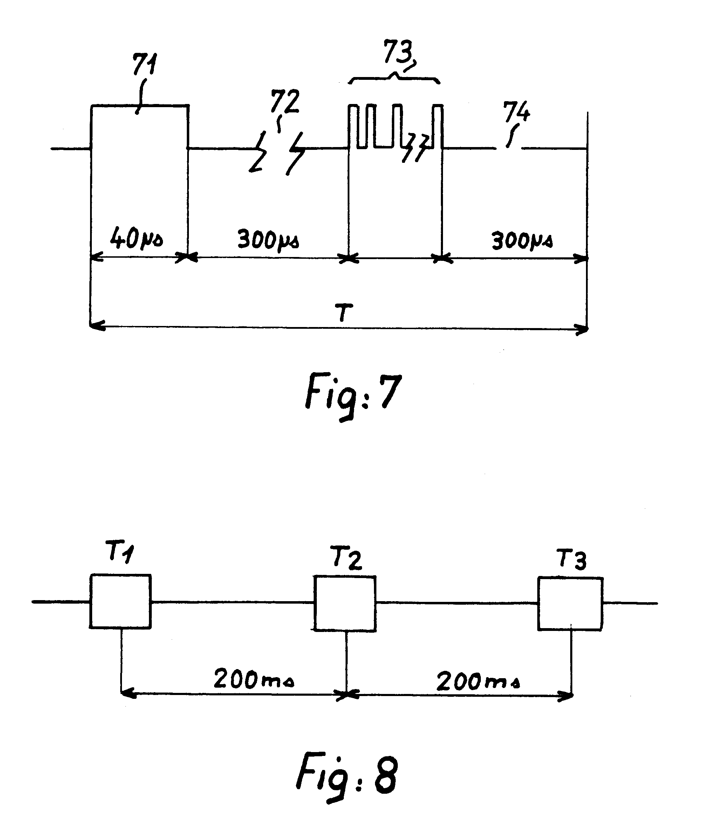

On constitue alors une trame numérique qui peut être organisée comme illustré sur la figure 7. La trame commence par une impulsion 71, de durée environ 40 $\mu$s, se poursuit par un intervalle libre d'une durée de l'ordre de 300 $\mu$s, puis par un intervalle 73 pendant lequel on émet les informations binaires selon le code représenté sur la figure 6, et se termine enfin par un intervalle libre 74, qui peut être également de 300 $\mu$s.

La première impulsion 71 permet à un microprocesseur placé dans le boîtier de télécommande, de vérifier le courant circulant dans la photodiode. Selon que la valeur obtenue est au-dessus ou en-dessous d'un seuil prédéterminé, le micro-processeur délivre un bit de contrôle de valeur 1 ou 0, qui est le bit 63 illustré sur la figure 5b.

Chaque boîtier de télécommande ré-émet cycliquement une trame, comme illustré sur la figure 8. A titre explicatif, cette figure montre trois trames identiques T1, T2, T3 séparées par un intervalle de 200 ms.

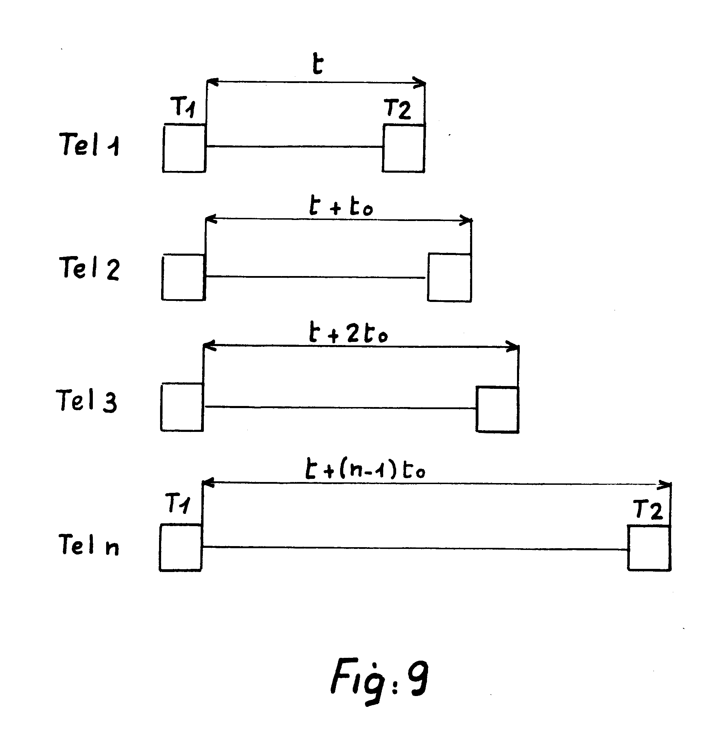

Comme, dans un centre de contrôle, on peut trouver simultanément plusieurs opérateurs effectuant des contrôles (ce qui est justement l'une des possibilités offertes par le système de l'invention), un récepteur pourrait éventuellement recevoir plusieurs signaux de télécommande provenant de plusieurs boîtiers distincts (certains signaux parvenant au récepteur après réflexions parasites). Pour réduire le risque de telles collisions, l'invention propose, à titre de variante, d'utiliser un cycle de répétition de trame particulier qui est illustré sur la figure 9.

Un boîtier de télécommande ayant le rang numéro 1, présente un cycle de répétition de trame caractérisé par une période t, égale par exemple à 200 ms, comme pour l'exemple illustré sur la figure 8. Un boîtier de télécommande de rang 2, aura un cycle de répétition de trame caractérisé par une valeur un peu supérieure égale à t + t0. Un boîtier de télécommande de rang n possèdera alors un cycle de répétition dont la durée sera t + (n-1)t0.

Ainsi, avec un tel système de répétition de trame, s'il apparaît une collision pour deux trames provenant de deux boîtiers de télécommande différents, cette collision sera nécessairement évitée pour les trames suivantes puisque celles-ci ne seront pas en coïncidence. En réception de télécommande, on valide l'information après deux trames consécutives identiques.

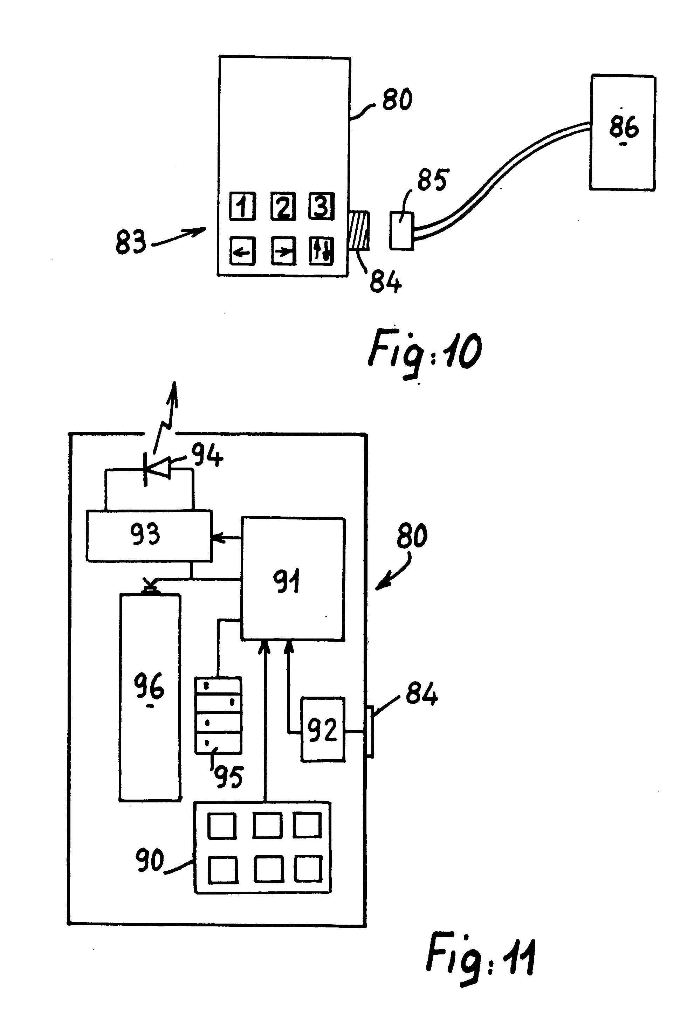

Bien que les boîtiers de télécommande aient pour principale fonction de commander à distance un ordre d'exécution d'une opération de contrôle, ils peuvent être utilisés avantageusement comme moyens de transmission d'informations provenant d'un appareil annexe (mode télémesure). C'est ce qui est illustré sur la figure 10 où l'on voit un boîtier 80 avec son clavier 83, avec également une fiche 84 dans laquelle peut venir s'engager un connecteur 85 relié à un appareil 86. Cet appareil peut être par exemple un pédomètre.

Dans ces conditions, le pédomètre installé sur un véhicule délivre des informations qui sont dirigées à travers le boîtier 80 vers le photorécepteur des moyens d'affichage.

C'est précisément le rôle du bit 63 de la figure 5b de définir le mode de fonctionnement en cours. En mode télécommande (bit 63 égal par exemple à 1) les données 62 traduisent le code de la touche sélectionnée ; en mode télémesure (bit 63 égal à 0) les données 62 traduisent l'information transmise par le pédomètre. On peut passer d'un mode de fonctionnement à l'autre par simple action sur le clavier. Par exemple en appuyant sur deux touches simultanément on obtiendra le mode télémesure et en appuyant sur une seule touche on obtiendra le mode télécommande.

La figure 11 montre le schéma synoptique d'un boîtier de télécommande 80 dans le cas où le boîtier fonctionne par émission de rayonnement infrarouge. Le boîtier représenté comprend un circuit 90, qui traduit la pression exercée sur une touche en un signal électrique adressé à un microprocesseur 91. Un convertisseur analogique-numérique 92 a son entrée reliée au connecteur 84 et sa sortie reliée au microprocesseur 91. Ce dernier commande un circuit 93 d'alimentation d'une diode électroluminescente 94. Un dispositif 95, du genre multi-commutateur ("switch") permet d'afficher une identité numérique, par exemple sur quatre bits si l'on veut obtenir seize identités distinctes. Une pile 96 alimente l'ensemble. Le circuit 93 contient une résistance connectée en parallèle sur la diode et le microprocesseur mesure le courant circulant dans cette résistance. Il délivre alors un bit de contrôle qui indique si ce courant est au-dessus ou en dessous d'un seuil. C'est le bit référencé 64 sur la figure 5b.

Le clavier 83 et son dispositif électronique associé 90, n'ont pas à être d'une grande complexité étant donné le dialogue qui s'instaure entre le contrôleur et le poste de contrôle.

Il suffit généralement de trois touches marquées 1, 2 et 3 pour désigner un choix parmi trois offres, et quelques touches du genre "avant", "arrière".

Ainsi qu'il a déjà été indiqué, l'équipement selon l'invention est destiné à équiper non seulement des centres de contrôle technique de véhicules automobiles, mais également des ateliers de réparation ou bien encore des chaînes de fabrication de véhicules, à la sortie de ces chaînes.

**Revendications**

1. Equipement d'acquisition et de traitement de données pour le contrôle simultané de plusieurs véhicules situés à des postes de contrôle différents (Pi, Pi + 1...) dans un centre de contrôle technique, un atelier de réparation, ou à la sortie d'une chaîne de fabrication de véhicules, cet équipement comprenant une console de commande (10) connectée à une unité centrale informatisée (UC) reliée aux différents postes de contrôle (Pi), caractérisé par le fait qu'il comprend en outre :
   - des boîtiers de télécommande (Tel1, Tel2...) munis chacun d'un clavier à touches (83) et d'un moyen réglable (95) permettant de définir une identité pour chaque boîtier, chaque boîtier étant capable d'émettre un signal comprenant une première partie (61) qui traduit l'identité du boîtier et une seconde partie (62) qui comprend une information constituant un code correspondant à une touche du clavier, la console de commande (10) permettant à un opérateur d'affecter à chaque véhicule se présentant au centre de contrôle un boîtier de télécommande et de mettre en correspondance l'identité du véhicule et l'identité du boîtier qui lui est affecté,
   - des moyens d'affichage (20) disposés à proximité des postes de contrôle, ces moyens étant aptes à afficher des informations liées au contrôle, ainsi qu'un menu d'opérations proposées au contrôleur, chaque opération étant présentée sur l'écran avec un code de sélection qui correspond aux codes des différentes touches du clavier des boîtiers de télécommande,
   - des récepteurs de télécommande (21) disposés à proximité des moyens d'affichage, ces récepteurs étant aptes à recevoir le signal émis par les boîtiers de télécommande, et en ce que l'unité centrale informatisée (UC) est en outre reliée aux moyens d'affichage (20) et aux récepteurs de télécommande (21).

2. Equipement selon la revendication 1, caractérisé par le fait que l'unité centrale comprend au moins une carte contrôleur de poste comprenant plusieurs sous-ensembles constitués chacun par un circuit de saisie (51) relié à l'un des postes de contrôle, un circuit de commande d'affichage (52) relié au moyen d'affichage (20) associé à ce poste.

3. Equipement selon la revendication 1, caractérisé par le fait que les boîtiers de télécommande sont du type à émission infrarouge et comprennent au moins une diode (94) émettant en infrarouge.

4. Equipement selon la revendication 3, caractérisé par le fait que l'identité de chaque boîtier et les données de télécommande sont transmises de manière numérique par impulsions codées.

5. Equipement selon la revendication 4, caractérisé par le fait que les impulsions sont codées en position.

6. Equipement selon la revendication 4, caractérisé par le fait que les informations numériques transmises sont organisées en trames (T1, T2, T3), répétées cycliquement.

7. Equipement selon la revendication 6, caractérisé par le fait que la période de répétition du cycle de transmission des trames varie d'un boîtier à l'autre.

8. Equipement selon la revendication 3, caractérisé par le fait que chaque boîtier de télécommande comprend un connecteur (84) permettant la liaison électrique avec un appareil (86), un convertisseur analogique-numérique (92) pour convertir la grandeur délivrée par l'appareil et la convertir en numérique pour une transmission par le boîtier au lieu et place des données de télécommande.

9. Equipement selon la revendication 1, caractérisé par le fait que les moyens d'affichage (20) sont des tubes à rayons cathodiques.

## Claims

1. Equipment for obtaining and processing data for the simultaneous checking of several vehicles located at different checking stations (Si, Si + 1....) in a technical checking central station, in a repair shop or at the end of a line for the manufacturing of vehicles, said equipment comprising a control console (10) connected to a central processing unit (UC) linked to the various checking stations (Si),
characterized in that it further comprises :
   - remote control units (Tel 1, Tel 2 . ..) each provided with a keyboard (83) and with adjustable means (95) allowing an identification to be defined for each remote control unit, each one of said units being capable of sending out a signal comprising a first portion (61) providing the identification of the unit and a second portion (62) including data which constitute a specific code corresponding to one given key of the keyboard, whereby the control console (10) enables a checking operator to assign to each vehicle received in the central checking station one remote control unit and to match the vehicle identification with the identification of the remote control unit assigned to said vehicle,
   - display means (20) placed in proximity to the checking stations, said means being adapted for displaying data linked with the checking operations, and for displaying a menu of operations made optionally available to the checking operator, each such operation being displayed on the screen with a selection code corresponding to the codes of the various keys of the keyboard of the remote control units,
   - remote control receivers (21) placed in proximity to said display means, said receivers being adapted for receiving the signal sent out by the remote control units,
   - said equipment being further characterized in that the central processing unit (UC) is also connected to the display means (20) and to the remote control receivers (21).

2. Equipment according to Claim 1, characterized in that the central processing unit comprises at least one station control card comprising several sub-assemblies, each of which is constituted by a data pick-up circuit (51) connected to one of the checking stations, and a display control circuit (52) connected to the display means (20) associated with said station.

3. Equipment according to Claim 1, characterized in that the remote control units are of the infrared emitting type and comprise at least one infrared emitting diode (94).

4. Equipment according to Claim 3, characterized in that the identification of each remote control unit and the remote control data are transmitted in digital form as coded pulses.

5. Equipment according to Claim 4, characterized in that the pulses are position-coded.

6. Equipment according to Claim 4, characterized in that the digital data being transmitted are organized into cyclically repeated frames (F1, F2, F3).

7. Equipment according to Claim 6, characterized in that the repetition frequency of the frame transmission cycle varies from one remote control unit to the other.

8. Equipment according to Claim 3, characterized in that each remote control unit comprises a connector (84) adapted for its electrical connection with an apparatus (86), an analog-digital converter (92) for converting the analog magnitude delivered by said apparatus into a digital form for allowing it to be transmitted by the remote control unit, instead of the remote control data.

9. Equipment according to Claim 1, characterized in that the display means (20) are cathode ray tubes.

## Patentansprüche

1. System zur Erfassung und Verarbeitung von Daten für die gleichzeitige Prüfung von mehreren Kraftfahrzeugen, die sich auf verschiedenen Prüfständen (Pi, Pi + 1, ...) in einem technischen Kontrollzentrum, einer Reparaturwerkstatt oder am Ausgang einer Fertigungsstraße befinden, wobei das System eine Steuerkonsole (10) aufweist, die an eine mit den verschiedenen Prüfständen (Pi) verbundene Rechnerzentraleinheit (UC) angeschlossen ist,
dadurch gekennzeichnet,
daß das System weiterhin aufweist:
   - Fernsteuergeräte (Tel1, Tel2, ...) mit jeweils einer Tastatur (83) und einem einstellbaren Mittel (95), das es erlaubt, für jedes Fernsteuergerät eine Identität zu definieren, wobei jedes Fernsteuergerät in der Lage ist, ein Signal auszusenden, das aus einem ersten Teil (61) besteht, der die Identität des Fernsteuergeräts wiedergibt, und einem zweiten Teil (62), der eine Information enthält, die einen einer Taste der Tastatur entsprechenden Kode darstellt, wobei die Steuerkonsole (10) es einer Bedienungsperson erlaubt, jedem Fahrzeug, das sich in dem Kontrollzentrum einfindet, ein Fernsteuergerät zuzuordnen und eine Korrespondenz zwischen der Identität des Fahrzeugs und der Identität des ihm zugeordneten Fernsteuergeräts herzustellen,

- in der Nähe der Prüfstände angeordnete Anzeigemittel (20), die in der Lage sind, mit der Prüfung verbundene Informationen sowie ein Menu mit Operationen anzuzeigen, die der Bedienungsperson vorgeschlagen werden, wobei jede Operation auf dem Bildschirm mit einem Auswahlkode dargestellt wird, der den Kodes der verschiedenen Tasten der Tastatur des Fernsteuergeräts entspricht, und
- in der Nähe der Anzeigemittel angeordnete Fernsteuerempfänger (21), die in der Lage sind, das von den Fernsteuergeräten ausgesendete Signal zu empfangen,

und daß die Rechnerzentraleinheit (UC) außerdem mit den Anzeigemitteln (20) und mit den Fernsteuerempfängern (21) verbunden ist.

2. System nach Anspruch 1, dadurch gekennzeichnet, daß die Zentraleinheit wenigstens eine Platzprüfer-Karte aufweist, die mehrere Untergruppen enthält, von denen jede aus einer mit einem der Prüfstände verbundenen Erfassungschaltung (51) und einer mit dem diesem Prüfstand zugeordneten Anzeigemittel (20) verbundenen Anzeigesteuerschaltung (52) besteht.

3. System nach Anspruch 1, dadurch gekennzeichnet, daß die Fernsteuergeräte Infrarot-Fernsteuergeräte sind und wenigstens eine im Infrarotbereich emittierende Diode (94) besitzen.

4. System nach Anspruch 3, dadurch gekennzeichnet, daß die Identität jedes Fernsteuergeräts und die Fernsteuerungdaten digital durch kodierte Impulse übertragen werden.

5. System nach Anspruch 4, dadurch gekennzeichnet, daß die Impulse lagekodiert sind.

6. System nach Anspruch 4, dadurch gekennzeichnet, daß die übertragenen digitalen Informationen in zyklisch wiederholten Rahmen (T1, T2, T3) organisiert sind.

7. System nach Anspruch 6, dadurch gekennzeichnet, daß die Wiederholperiode des Übertragungszyklus der Rahmen von einem Fernsteuergerät zum anderen variiert.

8. System nach Anspruch 3, dadurch gekennzeichnet, daß jedes Fernsteuergerät einen Steckverbinder (84) aufweist, der die elektrische Verbindung mit einem Gerät (86) ermöglicht, ferner einen Analog/Digitalwandler (92) zur Umwandlung der von dem Gerät gelieferten Größe in digitale Daten für eine Übertragung durch das Fernsteuergerät anstelle der Fernsteuerungsdaten.

9. System nach Anspruch 1, dadurch gekennzeichnet, daß die Anzeigemittel (20) Kathodenstrahlröhren sind.

Fig.1

Fig: 2

*Fig:3*

Fig:4

a

61　　　　62

b

63　　61　　62　　64

Fig: 5

100µs

10µs

0:

1:

200µs

Fig: 6

Fig: 7

Fig: 8

Fig. 9

Fig:10

Fig:11